# FASCICULE DE BREVET EUROPEEN

(11) **EP 0 591 066 B1**
(45) Date de publication et mention de la délivrance du brevet: **06.05.1998**
(21) Numéro de dépôt: 93402415.9
(22) Date de dépôt: 01.10.1993
(51) Int. Cl.: B60H 1/24

(54) **Dispositif de ventilation et de chauffage de l'habitacle d'un véhicule**
Vorrichtung für die Heizung und Lüftung des Innenraums von einem Fahrzeug
Device for heating and ventilating the passenger compartment of a vehicle

(30) Priorité: 02.10.1992 FR 9211680
(43) Date de publication de la demande: 06.04.1994
(73) Titulaire: VALEO THERMIQUE HABITACLE, 78320 Le Mesnil-Saint-Denis (FR)
(72) Inventeur: Dauvergne, Jean, F-95470 Fosses (FR)
(74) Mandataire: Gamonal, Didier

(56) Documents cités:
- EP-A- 0 503 987
- WO-A-91/06441
- CH-A- 336 709
- DE-A- 3 702 629
- FR-A- 1 323 602
- PATENT ABSTRACTS OF JAPAN vol. 11, no. 281 (M-624)(2728) 11 Septembre 1987 & JP-A-62 080 118 (NIPPON DENSO) 14 Avril 1987
- PATENT ABSTRACTS OF JAPAN vol. 8, no. 128 (M-302)(1565) 14 Juin 1984 & JP-A-59 032 513 (NISSAN JIDOSHA) 22 Février 1984
- PATENT ABSTRACTS OF JAPAN vol. 12, no. 236 (M-715)(3083) 6 Juillet 1988 & JP-A-63 028 714 (NIPPON DENSO) 6 Février 1988

## Description

L'invention concerne un dispositif de chauffage/ventilation et/ou de climatisation de l'habitacle d'un véhicule, comprenant une zone de traitement d'air contenant des organes de traitement tels que pulseur, source de chaleur, volets de réglage, cette zone de traitement d'air étant placée en avant de l'habitacle et communiquant avec celui-ci d'une part par des sorties permettant d'envoyer dans l'habitacle de l'air traité, d'autre part par au moins une entrée permettant d'admettre dans ladite zone de l'air en recirculation.

Dans un tel dispositif, pour des raisons de commodité évidentes, l'entrée d'air de recirculation, comme les sorties d'air vers l'habitacle, est généralement placée à l'avant de celui-ci. Il peut en résulter une circulation d'air très réduite, ou même inexistante, dans la région arrière de l'habitacle.

Par ailleurs, lorsque la température extérieure est très élevée ou très basse, le plancher du véhicule, qui est directement en contact avec l'atmosphère extérieure et exposé, dans le premier cas, au rayonnement calorifique émanant de la chaussée, est lui-même porté à une température élevée ou basse, nuisant au confort des occupants dont les pieds reposent sur le plancher.

Le but de l'invention est de remédier à ces inconvénients, et de permettre une circulation d'air dans tout le volume intérieur de l'habitacle, ainsi qu'une température confortable du plancher.

L'invention prévoit notamment que, dans un dispositif du genre défini en introduction, ladite entrée est située dans la région arrière de l'habitacle et est reliée à ladite zone par une conduite de recirculation définissant un matelas d'air en circulation dans une double paroi du plancher du véhicule, ce matelas s'étendant sur une fraction notable de la face inférieure de l'habitacle.

L'air traité par le dispositif circule dans l'habitacle entre les sorties, dont certaines au moins sont situées dans la région avant, et l'entrée (ou les entrées) située(s) dans la région arrière, ce qui l'oblige à traverser l'ensemble du volume de l'habitacle. Par ailleurs, la paroi supérieure du plancher, en contact avec les pieds des occupants du véhicule, est balayée sur sa face inférieure par le courant d'air qui vient de quitter l'habitacle et qui est par conséquent à une température relativement voisine de celle régnant dans l'habitacle. De plus cette paroi est protégée du rayonnement de la chaussée par la paroi inférieure.

D'autres caractéristiques, complémentaires ou alternatives, du dispositif selon l'invention sont énoncées ci-après :
- Ledit matelas s'étend sur au moins la quasi-totalité de la face inférieure de l'habitacle.
- Il comprend un organe de réglage de recirculation disposé à l'extrémité aval de la conduite de recirculation et permettant d'admettre dans la zone de traitement une fraction réglable du débit d'air circulant dans ladite conduite, la fraction complémentaire étant directement évacuée par une sortie d'air vers l'extérieur.

D'autres caractéristiques et avantages de l'invention apparaîtront à l'examen de la description détaillée ci-après, et des dessins annexés, sur lesquels :

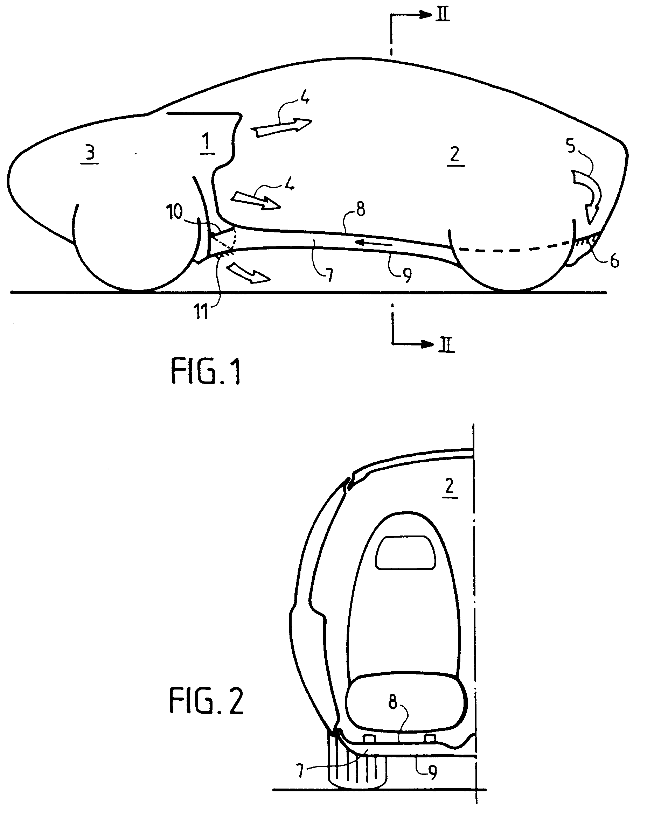

- la figure 1 est une représentation schématique de la carrosserie d'un véhicule automobile équipé d'un dispositif selon l'invention, en coupe longitudinale ; et
- la figure 2 est une vue partielle en coupe selon la ligne II-II de la figure 1.

Le véhicule illustré possède un dispositif de chauffage et de ventilation comprenant une zone de traitement d'air 1 placée en avant de l'habitacle 2, entre celui-ci et le capot moteur 3. La zone de traitement communique directement avec l'habitacle par des sorties d'air de façon à envoyer dans l'habitacle un courant d'air traité symbolisé par des flèches 4. Cet air traité circule de l'avant à l'arrière de l'habitacle et se dirige, selon une flèche 5, vers une entrée d'air de recirculation 6 située à l'arrière de l'habitacle. L'entrée 6 est reliée à la zone de traitement 1 par une conduite de recirculation 7 qui définit un matelas d'air en circulation entre une paroi supérieure 8 et une paroi inférieure 9 du plancher du véhicule. La conduite 7 s'étend sur la totalité, ou sur la quasi-totalité, de la face inférieure de l'habitacle, et est conçue de telle sorte que l'air y circule également sur au moins la quasi-totalité de cette face.

A titre d'exemple, la température extérieure est de -10°C, et de l'air chauffé à 45°C sort de la zone de traitement selon les flèches 4 pour que la température au centre de l'habitacle soit égale à 25°C. La température de l'air est de 20°C à l'arrière de l'habitacle, 15°C vers l'arrière de la conduite 7 et 10°C vers l'avant de celle-ci, c'est-à-dire que la face inférieure de la paroi 8 est exposée à une température supérieure d'au moins 20°C à la température extérieure.

Dans l'exemple illustré, un volet de réglage de recirculation 10 et une sortie d'air vers l'extérieur 11 sont prévus à l'extrémité avant de la conduite 7, à la jonction entre celle-ci et la zone de traitement 1. Le volet 10 peut pivoter de façon à mettre la conduite 7 en communication avec la zone 1 et/ou avec la sortie 11, pour admettre dans la zone de traitement une fraction réglable du débit d'air circulant dans cette conduite. Dans le cas où une fraction au moins de ce débit est évacuée par la sortie 11, un débit correspondant est introduit dans la zone de traitement par une entrée d'air extérieur non représentée.

## Revendications

1. Dispositif de chauffage/ventilation et/ou de climatisation de l'habitacle (2) d'un véhicule, comprenant une zone de traitement d'air (1) contenant des organes de traitement tels que pulseur, source de chaleur, volets de réglage, cette zone de traitement d'air étant placée en avant de l'habitacle et communiquant avec celui-ci d'une part par des sorties permettant d'envoyer dans l'habitacle de l'air traité (4), d'autre part par au moins une entrée (6) permettant d'admettre dans ladite zone de l'air de recirculation, ladite entrée étant située dans la région arrière de l'habitacle et étant reliée à ladite zone par une conduite de recirculation (7), caractérisé en ce que la conduite de recirculation définit un matelas d'air en circulation dans une double paroi (8, 9) du plancher du véhicule, ce matelas s'étendant sur une fraction notable de la face inférieure de l'habitacle.

2. Dispositif selon la revendication 1, caractérisé en ce que ledit matelas s'étend sur au moins la quasi-totalité de la face inférieure de l'habitacle.

3. Dispositif selon l'une des revendications 1 et 2, caractérisé en ce qu'il comprend un organe de réglage de recirculation (10) disposé à l'extrémité aval de la conduite de recirculation et permettant d'admettre dans la zone de traitement une fraction réglable du débit d'air circulant dans ladite conduite, la fraction complémentaire étant directement évacuée par une sortie d'air (11) vers l'extérieur.

## Claims

1. A heating, ventilating, and/or air conditioning apparatus for the cabin (2) of a vehicle, comprising an air treatment zone (1) containing treatment means such as a blower, a heat source, and regulating valves, this air treatment zone being arranged in front of the cabin and communicating with the latter, firstly through outlets enabling the treated air (4) to be delivered into the cabin, and secondly through at least one inlet (6) which enables recirculated air to be admitted into the said zone, the said inlet being situated in the rear region of the cabin and being connected to the said zone through a recirculation duct (7), characterised in that the recirculation duct (7) defines a moving air mattress within a double wall (8, 9) of the floor of the vehicle, the said mattress extending over a substantial part of the floor surface of the cabin.

2. Apparatus according to Claim 1, characterised in that the said mattress extends over all or nearly all of the floor surface of the cabin.

3. Apparatus according to Claim 1 or Claim 2, characterised in that it includes a recirculation adjusting member (10) disposed at the downstream end of the recirculation duct, for admitting an adjustable fraction of the air flow in the said duct into the treatment zone, the complementary faction being directly evacuated to the outside through an air outlet (11).

## Patentansprüche

1. Vorrichtung für die Heizung, Lüftung und/oder Klimatisierung des Fahrgastraums (2) eines Fahrzeugs, die eine Luftaufbereitungszone (1) umfaßt, die Aufbereitungsorgane wie ein Luftgebläse, eine Wärmequelle und Regelklappen enthält, wobei diese Luftaufbereitungszone vor dem Fahrgastraum angeordnet ist und mit diesem einerseits über Auslässe, die die Einleitung der aufbereiteten Luft in den Fahrgastraum (4) ermöglichen, und andererseits über mindestens einen Einlaß (6) in Verbindung steht, der die Zufuhr von Umluft in die besagte Zone ermöglicht, wobei der besagte Einlaß im hinteren Bereich des Fahrgastraums angeordnet und mit der besagten Zone durch einen Umluftkanal (7) verbunden ist, **dadudurch gekennzeichnet,** daß der Umluftkanal eine in einer Doppelwand (8, 9) des Fahrzeugbodens zirkulierende Luftschicht definiert, wobei sich diese Luftschicht auf einem erheblichen Teil der Unterseite des Fahrgastraums erstreckt.

2. Vorrichtung nach Anspruch 1 , **dadurch gekennzeichnet**, daß sich die besagte Luftschicht zumindest fast auf der Gesamtheit der Unterseite des Fahrgastraums erstreckt.

3. Vorrichtung nach einem der Ansprüche 1 und 2, **dadurch gekennzeichnet**, daß sie ein Umluftregelungsorgan (10) umfaßt, das am hinteren Ende des Umluftkanals angeordnet ist und die Zufuhr eines regelbaren Anteils der in dem besagten Kanal zirkulierenden Luftmenge in die Aufbereitungszone ermöglicht, während der komplementäre Anteil durch einen Luftauslaß (11) direkt nach außen abgeleitet wird.
